# EUROPÄISCHE PATENTSCHRIFT

(11) **EP 4 316 879 B1**
(45) Veröffentlichungstag und Bekanntmachung des Hinweises auf die Patenterteilung: **18.06.2025**
(21) Anmeldenummer: 23189604.4
(22) Anmeldetag: 03.08.2023
(51) Int. Cl.: B60H 1/00

(54) **BAUTEIL ZUR WARMLUFTVERTEILUNG FÜR EIN FREIZEITFAHRZEUG UND FREIZEITFAHRZEUG MIT SOLCH EINEM BAUTEIL**
HOT AIR DISTRIBUTION COMPONENT FOR A RECREATIONAL VEHICLE AND RECREATIONAL VEHICLE WITH SAID COMPONENT
PIÈCE DE CONSTRUCTION POUR LA DISTRIBUTION D'AIR CHAUD POUR UN VÉHICULE DE LOISIRS ET VÉHICULE DE LOISIRS AVEC LADITE PIÈCE DE CONSTRUCTION

(30) Priorität: 03.08.2022 DE 102022119522
(43) Veröffentlichungstag der Anmeldung: 07.02.2024
(73) Patentinhaber: Hymer GmbH & Co. KG, 88339 Bad Waldsee (DE)
(72) Erfinder: Beermann, Michael, 88161 Lindenberg (DE)
(74) Vertreter: Müller Schupfner & Partner Patent- und Rechtsanwaltspartnerschaft mbB (Muc)

(56) Entgegenhaltungen:
- DE-B- 1 124 840
- US-A- 2 417 463
- US-A- 2 756 000

## Beschreibung

Die Erfindung betrifft ein Bauteil zur Warmluftverteilung für ein Freizeitfahrzeug, insbesondere ein Wohnmobil oder einen Wohnwagen, und ein Freizeitfahrzeug mit solch einem Bauteil.

Aus der EP 2 123 493 A1 ist ein Wohnmobil oder Wohnwagen mit einem Warmluft-Thermoboden bekannt. Hierbei ist eine untere, lastaufnehmende Deckschicht vorgesehen, die unterseitig mit einem Unterbodenschutz beschichtet ist, auf der eine Schicht aus dicht miteinander verbundenen Isolierplatten aufgelegt ist, die zur Führung eines Warmluftstromes bestimmt sind, wobei die Isolierplatten unter Bildung von Warmluft durchströmten Hohlräumen nach oben hin durch eine obere Deckschicht abgedeckt sind. Hierbei sind die Warmluft-durchströmten Hohlräume durch in den Isolierplatten eingebrachte Kanäle gebildet. Die Kanäle können als Fräskanäle ausgebildet sein.

Aus der DE 10 2011 106 603 A1 ist ein Wohnmobil oder Wohnwagen mit einem Fahrgestell bekannt, das einen linken oder rechten Rahmenlängsträger umfasst. An den Rahmenlängsträgern ist ein Doppelboden befestigt, welcher obere und untere Tragelemente aufweist, wobei das obere Tragelement eine über die Erstreckung eines Wohnbereichs ebene und den Boden des Wohnbereichs bildende obere Bodenplatte ist. Der sich über die Länge des Wohnbereichs erstreckende Doppelboden dient zur Aufnahme von funktionellen Einheiten, wie beispielsweise einer Gasflasche oder einer Heizung.

Aus der US 2 756 000 A ist eine Vorrichtung zum Heizen von Räumen mit einem Verteilerkopf zum Verteilen eines Luftstroms und einem Verbindungselement bekannt.

Aus der US 2 417 463 A ist ein Kanal mit verschließbaren Registern bekannt.

Aus der DE 1 124 840 B ist eine Luftheizungsanlage für Kraftfahrzeuge, bei der die mit einem Lufteinlass versehenen Heizaggregate in einer Vertiefung des Fahrzeugbodens angeordnet sind und durch Luftauslassöffnungen mit dem Innenraum des Fahrzeugs verbunden sind, bekannt.

Aufgabe der Erfindung ist es, ein Bauteil zur Warmluftverteilung für ein Freizeitfahrzeug, insbesondere ein Wohnmobil oder einen Wohnwagen, und ein Freizeitfahrzeug anzugeben, die eine verbesserte Ausgestaltung und Funktionsweise ermöglichen.

Die Aufgabe wird durch ein Bauteil zur Warmluftverteilung für ein Freizeitfahrzeug, gemäß dem unabhängigen Anspruch 1 gelöst.

Ferner wird die Aufgabe durch ein Freizeitfahrzeug, insbesondere ein Wohnmobil oder einen Wohnwagen, mit zumindest einem solchen Bauteil gelöst, wobei das Bauteil unter einem Boden montiert ist.

Vorteilhaft ist es, dass der Warmlufteingang im montierten Zustand im Bereich der ersten Fahrzeugseite angeordnet ist. Hierdurch können in vorteilhafter Weise konstruktive Freiheiten innerhalb des Freizeitfahrzeugs gewährleistet werden, so dass sich ein großer Anwendungsbereich für das Bauteil ergibt.

Erfindungsgemäß ist zumindest eine weitere Warmluftführung vorgesehen, wobei ein weiterer Warmlufteingang vorgesehen ist und wobei der Warmlufteingang und der weitere Warmlufteingang nebeneinander angeordnet sind. Auf diese Weise kann warme Luft sowohl in den Warmlufteingang als auch in den weiteren Warmlufteingang aus einer Quelle geführt werden.

Vorteilhaft ist es, dass der weitere Warmlufteingang im montierten Zustand im Bereich der ersten Fahrzeugseite angeordnet ist. Somit kann beispielsweise ein gemeinsames Rohr oder dergleichen, das in den Warmlufteingang und den weiteren Warmlufteingang warme Luft im Betrieb führt, an und/oder in einer Fahrzeugwand an der ersten Fahrzeugseite angeordnet sein.

Erfindungsgemäß ist es, dass zumindest ein weiterer Warmluftausgang vorgesehen ist, der im montierten Zustand im Bereich der zweiten Fahrzeugseite angeordnet ist, und dass im montierten Zustand über den weiteren Warmlufteingang zugeführte Warmluft durch die weitere Warmluftführung von dem weiteren Warmlufteingang zu dem weiteren Warmluftausgang führbar ist. Auf diese Weise kann gezielt eine gewisse Menge an Warmluft zusätzlich über die weitere Warmluftführung zur zweiten Fahrzeugseite geführt werden. Dadurch kann berücksichtigt werden, dass sich in der Warmluftführung in Bezug auf den ersten Warmluftausgang und den zweiten Warmluftausgang unterschiedliche Strömungswiderstände ergeben können, wenn die Warmluftausgänge beispielsweise gleich groß dimensioniert sind. Hierdurch kann auch eine gleiche Verteilung der Warmluft auf einerseits zumindest einen Warmluftausgang an der ersten Fahrzeugseite und andererseits über den zweiten Warmluftausgang und zumindest den weiteren Warmluftausgang an der zweiten Fahrzeugseite erreicht werden.

Vorteilhaft ist es auch, dass die Warmluftführung und die weitere Warmluftführung zumindest im Wesentlichen nebeneinander verlaufen, wobei zwischen der Warmluftführung und der weiteren Warmluftführung zumindest eine Trennwand vorgesehen ist. Hierdurch ergibt sich eine kompakte Ausgestaltung. Ferner können Wärmeverluste reduziert werden. Dies ermöglicht auch die Ausgestaltung der Trennwand als dünne Trennwand oder aus einem dünnen Material, wie einer Folie.

In vorteilhafter Weise ist in der Trennwand zumindest eine Ausnehmung für zumindest eine Versorgungsleitung ausgestaltet. Dadurch kann insbesondere unter dem Boden des Fahrzeugs eine Versorgungsleitung entlanggeführt werden, die das Bauteil kreuzt.

Vorteilhaft ist es auch, dass eine umlaufende Gehäusewand vorgesehen ist und dass die Warmluftführungen von der Gehäusewand umfasst sind.

Die Gehäusewand kann hierbei die mechanische Stabilität und einen Schutz gegenüber Beschädigung realisieren. Hierbei ist es ferner vorteilhaft, dass in der Gehäusewand zumindest eine Ausnehmung für zumindest eine Versorgungsleitung ausgestaltet ist. Dies ermöglicht wiederum in vorteilhafter Weise eine Verlegung der Versorgungsleitung, insbesondere unter dem Boden des Freizeitfahrzeugs.

Vorteilhaft ist es auch, dass eine zumindest im Wesentlichen geschlossene Unterseite des Bauteils vorgesehen ist. Hierbei ist es ferner vorteilhaft, dass an der Unterseite zumindest ein Positionierungsausschnitt vorgesehen ist, in dem im montierten Zustand ein Fahrzeugteil, insbesondere ein Teil des Fahrzeugrahmens, eingreift. Somit kann eine hohe mechanische Stabilität des Bauteils erzielt werden. Ferner kann eine hohe mechanische Stabilität der Befestigung erzielt werden.

Vorteilhaft ist es auch, dass eine zumindest im Wesentlichen geöffnete Oberseite vorgesehen ist, die im montierten Zustand von einem Boden verschließbar ist. Bei dem Boden kann es sich insbesondere um den Laufboden des Freizeitfahrzeugs handeln. Die offene Ausgestaltung ermöglicht einen reduzierten Materialeinsatz. Bei einer abgewandelten Ausgestaltung kann die Oberseite des Bauteils aber auch geschlossen oder teilweise geschlossen sein.

Weitere Vorteile und Einzelheiten der Erfindung werden anhand der in den schematischen Figuren dargestellten Ausführungsbeispiele näher erläutert. Hierbei zeigen:
- Fig. 1: ein Bauteil zur Warmluftverteilung für ein Freizeitfahrzeug in einer schematischen, räumlichen Darstellung entsprechend einem Ausführungsbeispiel und
- Fig. 2: ein Freizeitfahrzeug mit einem solchen Bauteil, wobei ein Ausschnitt im Bereich eines Bodens des Freizeitfahrzeugs dargestellt ist.

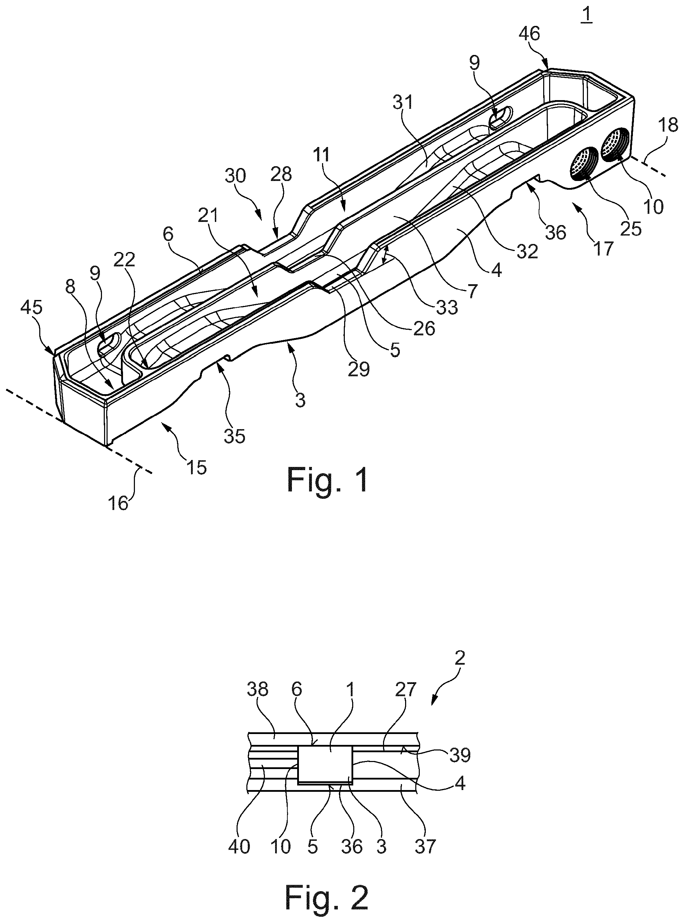

Fig. 1 zeigt ein Bauteil 1 zur Warmluftverteilung für ein Freizeitfahrzeug 2 (Fig. 2) in einer schematischen, räumlichen Darstellung entsprechend einem Ausführungsbeispiel der Erfindung. Das Bauteil 1 dient vorzugsweise für ein Freizeitfahrzeug 2, das als Wohnmobil oder Wohnwagen ausgebildet ist.

Das Bauteil 1 weist einen Grundkörper 3 auf, der eine umlaufende Gehäusewand 4 und eine geschlossene Unterseite 5 umfasst. In diesem Ausführungsbeispiel weist der Grundkörper 3 eine offene Oberseite 6 auf. Der Grundkörper 3 weist in diesem Ausführungsbeispiel außerdem eine Trennwand 7 auf, die innerhalb der umlaufenden Gehäusewand 4 angeordnet ist.

Das Bauteil 1 weist einen Warmlufteingang 8 und einen ersten Warmluftausgang 9 auf. Ferner ist ein zweiter Warmluftausgang 10 vorgesehen. Wenn das Bauteil 1, wie in Fig. 2 veranschaulicht, im Freizeitfahrzeug 2 montiert ist, dann kann über den Warmlufteingang 8 zugeführte Warmluft durch eine Warmluftführung 11 zu dem ersten Warmluftausgang 9 und zu dem zweiten Warmluftausgang 10 geführt werden. Hierbei kann die Warmluft von dem Warmlufteingang 8 auf ihrem Weg zum zweiten Warmluftausgang 10 am ersten Warmluftausgang 9 vorbeiführen. Bei einer abgewandelten Ausgestaltung kann die Warmluft vom Warmlufteingang 8 auch in unterschiedlichen Richtungen zum ersten Warmluftausgang 9 und zum zweiten Warmluftausgang 10 geführt werden. Hierdurch kann die Warmluftführung 11 in Bezug auf den jeweiligen Anwendungsfall geeignet ausgeführt werden.

Das Bauteil 1 ist so im Freizeitfahrzeug 1 montiert, dass der erste Warmluftausgang 9 im Bereich 15 einer ersten Fahrzeugseite 16 vorgesehen ist, die durch eine unterbrochene Linie veranschaulicht ist. Ferner ist das Bauteil 1 so montiert, dass zugleich der zweite Warmluftausgang 10 im Bereich 17 einer zweiten Fahrzeugseite 18 angeordnet ist, die ebenfalls durch eine unterbrochene Linie veranschaulicht ist. Die erste Fahrzeugseite 16 und die zweite Fahrzeugseite 18 liegen einander gegenüber. Speziell kann es sich bei der ersten Fahrzeugseite 16 oder der zweiten Fahrzeugseite 18 um die linke Fahrzeugseite handeln, wobei es sich bei der anderen Fahrzeugseite dann entsprechend um die rechte Fahrzeugseite handeln kann.

In diesem Ausführungsbeispiel ist der Warmlufteingang 8 so realisiert, dass dieser im montierten Zustand im Bereich 15 angeordnet ist, in dem auch der erste Warmluftausgang 9 angeordnet ist. Der Warmlufteingang 8 ist somit im Bereich 15 der ersten Fahrzeugseite 16 angeordnet, wenn das Bauteil 1 montiert ist.

Somit ist eine Warmluftverteilung von der einen zur anderen Fahrzeugseite möglich, wobei in diesem Ausführungsbeispiel die Warmluft von der Fahrzeugseite 16 auch an die Fahrzeugseite 18 verteilt wird. Das Bauteil 1 kann hierbei einen Grundkörper 3 aus einem wärmeisolierenden Material aufweisen. Ferner kann der Grundkörper 3 statisch selbsttragend ausgeführt sein. Speziell eignet sich das Bauteil 1 dann zur Unterflurmontage. In diesem Ausführungsbeispiel ist eine weitere Warmluftführung 21 vorgesehen. Für diese weitere Warmluftführung 21 ist ein weiterer Warmlufteingang 22 vorgesehen, der neben dem Warmlufteingang 8 angeordnet ist. In diesem Ausführungsbeispiel ist der weitere Warmlufteingang 22 somit ebenfalls im Bereich 15 der ersten Fahrzeugseite 16 angeordnet, wenn das Bauteil 1 montiert ist. In Bezug auf die weitere Warmluftführung 21 ist auch ein weiterer Warmluftausgang 25 vorgesehen, der im montierten Zustand im Bereich 17 der zweiten Fahrzeugseite 18 angeordnet ist. Der weitere Warmluftausgang 25 ist in diesem Ausführungsbeispiel neben dem zweiten Warmluftausgang 10 vorgesehen. Die Warmluftausgänge 10, 25 zeigen hierbei in die gleiche Richtung, also zur Front oder zum Heck des Freizeitfahrzeugs 2. Bei einer abgewandelten Ausgestaltung können die Warmluftausgänge 10, 25 auch in unterschiedliche Richtungen, also einmal zur Front und einmal zum Heck, zeigen. Über den Warmlufteingang 22 zugeführte Warmluft wird im Betrieb durch die weitere Warmluftführung 21 zu dem weiteren Warmluftausgang 25 geführt. Hierbei erfolgt zumindest bis zu dem weiteren Warmluftausgang 25 keine wesentliche Mischung mit der durch die Warmluftführung 11 geführten Warmluft.

Die Warmluftführung 11 und die weitere Warmluftführung 21 sind hierfür durch die Trennwand 7 zumindest im Wesentlichen voneinander getrennt. Die zumindest im Wesentlichen nebeneinander verlaufenden Warmluftführungen 11, 21 führen hierbei einen Teil der Warmluft von der ersten Fahrzeugseite 16 zur zweiten Fahrzeugseite 18.

In diesem Ausführungsbeispiel weist die Trennwand 7 eine Ausnehmung 26 auf. An der Ausnehmung 26 kann es zu einer vorzugsweise geringfügigen Mischung der durch die Warmluftführungen 11, 21 geführten Warmluft kommen. Die Trennwand 26 dient für eine Versorgungsleitung 27 (Fig. 2). In diesem Zusammenhang sind auch an der umlaufenden Gehäusewand 4 Ausnehmungen 28, 29 für die Versorgungsleitung 27 vorgesehen. Dadurch kann die Versorgungsleitung 27 insbesondere quer durch das Bauteil 1 geführt werden. Die Warmluftführung 11 und die weitere Warmluftführung 21 können in dem Bereich 30, der in diesem Ausführungsbeispiel ein mittlerer Bereich 30 des Bauteils 1 ist, Absenkungen 31, 32 aufweisen, so dass die entlang der Warmluftführungen 11, 21 betrachteten freien Querschnitte zur Warmluftführung durch die Versorgungsleitung 27 nicht wesentlich beeinträchtigt sind. Insbesondere können die Ausnehmungen 26, 28, 29 zumindest näherungsweise mit einer Tiefe 33 ausgeführt sein. Die Absenkungen 31, 32 können dann entsprechend der Tiefe 33 realisiert sein.

In diesem Ausführungsbeispiel sind an der Unterseite 5 des Bauteils 1 außerdem Positionierungsausschnitte 35, 36 vorgesehen, in die im montierten Zustand jeweils ein Fahrzeugsteil eingreift, wie es in Fig. 2 anhand des Fahrzeugteils 37 veranschaulicht ist.

Fig. 2 zeigt das Freizeitfahrzeug 2 mit dem Bauteil 1, wobei ein Ausschnitt im Bereich des Bodens 38 des Freizeitfahrzeugs 2 gezeigt ist. Bei dem Boden 38 kann es sich um den Laufboden handeln. Das Bauteil 1 ist an eine Unterseite 39 des Bodens 38 angelegt, so dass durch den Boden 38 das Bauteil 1 an der geöffneten Oberseite 6 verschlossen ist. Hierbei ist auch dargestellt, die die Versorgungsleitung 27, die an der Unterseite 39 des Bodens 38 montiert ist, durch das Bauteil 1 geführt ist. An den Warmluftausgängen 9, 10, 25 können Rohre angeschlossen sein, wie es exemplarisch durch ein Rohr 40 veranschaulicht ist.

Das Bauteil 1 eignet sich insbesondere für eine Unterflurmontage. Hierbei kann das Bauteil 1 an einer geeigneten Stelle des Freizeitfahrzeugs 2 angeordnet sein. In Bezug auf die Montageposition kann insbesondere der Grundkörper 3 angepasst ausgestaltet sein. In diesem Ausführungsbeispiel sind an dem Grundkörper 3 Dichtkonturen 45, 46 an der ersten Fahrzeugseite 16 und der zweiten Fahrzeugseite 18 vorgesehen, die beispielsweise für eine B-Säule dienen können. Bei Fahrzeugteile 37 kann es sich insbesondere um Teile eines Rahmens des Freizeitfahrzeugs 2 handeln. Die Versorgungsleitung 27 kann beispielsweise durch einen Kabelbaum realisiert sein. Die Versorgungsleitung 27 kann aber auch auf andere Weise ausgestaltet sein. Ferner können hier aber auch mehrere Leitungen gelegt sein. Der Grundkörper 3 kann wannenförmig mit der Trennwand 7 ausgestaltet sein, wie es in Fig. 1 veranschaulicht ist. Der Grundkörper 3 kann beispielsweise als Kunststoffteil, insbesondere auf Polypropylen-Basis, ausgestaltet sein. Speziell kann der Grundkörper 3 zumindest im Wesentlichen aus einem Partikelschaumstoff, insbesondere aus Polypropylen-Schaum (EPP), gebildet sein. Es sind allerdings auch andere Ausgestaltungen denkbar. Speziell bei einer Ausgestaltung auf der Basis von EPP ergibt sich eine vorteilhafte Wärmeisolierung, was den Wärmeverlust reduziert.

Das Bauteil 1 kann in einen Chassis-Aufbau integriert werden. Durch die Positionierungsausschnitte 35, 36 kann hierbei eine einfache werkzeuglose Montage und Positionierung umgesetzt werden. Erforderliche Verteilerabgänge können in das Bauteil 1 integriert werden. Durch entsprechende Konturen wird eine einfache Abdichtung zum Chassis und insbesondere zum Boden 38 gewährleistet. Hierdurch kann der Einbauort sowohl außerhalb als auch innerhalb des Freizeitfahrzeugs 2 liegen. Das Bauteil 1 eignet sich somit für einen breiten Anwendungsbereich, insbesondere für Ausgestaltungen des Freizeitfahrzeugs als Caravan, Campervan oder kompaktem Camperfahrzeug. Somit können je nach Ausgestaltung ein oder mehrere der folgenden Vorteile realisiert werden. Eine Unterflurschlauchverlegung kann entfallen. Eine lose Leitungsführung um einen Chassisrahmen und andere Bauteile wird vermieden. Fahr- und Windgeräusche können reduziert werden. Im Unterschied zu einer reinen Rohrverlegung, die durch die große Oberfläche und die schlechte Isolation Wärmeverluste hat, können diese durch das Bauteil 1 reduziert werden.

Die Erfindung ist nicht auf die beschriebenen Ausführungsformen beschränkt.

## Patentansprüche

1. Bauteil (1) zur Warmluftverteilung für ein Freizeitfahrzeug (2), insbesondere ein Wohnmobil oder einen Wohnwagen, mit zumindest einem Warmlufteingang (8) und einem ersten Warmluftausgang (9),
wobei zumindest ein zweiter Warmluftausgang (10) vorgesehen ist, wobei im montierten Zustand über den Warmlufteingang (8) zugeführte Warmluft durch eine Warmluftführung (11) von dem Warmlufteingang (8) zu dem ersten Warmluftausgang (9) und zu dem zweiten Warmluftausgang (10) führbar ist, und wobei im montierten Zustand der erste Warmluftausgang (9) im Bereich (15) einer ersten Fahrzeugseite (16) und der zweite Warmluftausgang (10) im Bereich (17) einer der ersten Fahrzeugseite (16) gegenüberliegenden zweiten Fahrzeugseite (18) angeordnet ist,
**dadurch gekennzeichnet,**
**dass** zumindest eine weitere Warmluftführung (21) vorgesehen ist, dass ein weiterer Warmlufteingang (22) vorgesehen ist und dass der Warmlufteingang (8) und der weitere Warmlufteingang (22) nebeneinander angeordnet sind,
**dass** zumindest ein weiterer Warmluftausgang (25) vorgesehen ist, der im montierten Zustand im Bereich (17) der zweiten Fahrzeugseite (18) angeordnet ist und dass im montierten Zustand über den weiteren Warmlufteingang (22) zugeführte Warmluft durch die weitere Warmluftführung (21) von dem weiteren Warmlufteingang (22) zu dem weiteren Warmluftausgang (25) führbar ist.

2. Bauteil (1) nach Anspruch 1,
**dadurch gekennzeichnet,**
**dass** der Warmlufteingang (8) im montierten Zustand im Bereich (15) der ersten Fahrzeugseite (16) angeordnet ist.

3. Bauteil (1) nach einem der vorhergehenden Ansprüche ,
**dadurch gekennzeichnet,**
**dass** der weitere Warmlufteingang (22) im montierten Zustand im Bereich (15) der ersten Fahrzeugseite (16) angeordnet ist.

4. Bauteil (1) nach einem der vorhergehenden Ansprüche,
**dadurch gekennzeichnet,**
**dass** die Warmluftführung (11) und die weitere Warmluftführung (21) zumindest im Wesentlichen nebeneinander verlaufen, wobei zwischen der Warmluftführung (11) und der weiteren Warmluftführung (21) zumindest eine Trennwand (7) vorgesehen ist.

5. Bauteil (1) nach Anspruch 4,
**dadurch gekennzeichnet,**
**dass** in der Trennwand (7) zumindest eine Ausnehmung (26) für zumindest eine Versorgungsleitung (27) ausgestaltet ist.

6. Bauteil (1) nach einem der Ansprüche 1 bis 5,
**dadurch gekennzeichnet,**
**dass** eine umlaufende Gehäusewand (4) vorgesehen ist und dass die Warmluftführungen (11, 21) von der Gehäusewand (4) umfasst sind.

7. Bauteil (1) nach Anspruch 6,
**dadurch gekennzeichnet,**
**dass** in der Gehäusewand (4) zumindest eine Ausnehmung (28, 29) für zumindest eine Versorgungsleitung (27) ausgestaltet ist.

8. Bauteil (1) nach einem der Ansprüche 1 bis 7,
**dadurch gekennzeichnet,**
**dass** eine zumindest im Wesentlichen geschlossene Unterseite (5) vorgesehen ist.

9. Bauteil (1) nach Anspruch 8,
**dadurch gekennzeichnet,**
**dass** an der Unterseite (5) zumindest ein Positionierungsausschnitt (35, 36) vorgesehen ist, in dem im montierten Zustand ein Fahrzeugteil (37) eingreift.

10. Bauteil (1) nach einem der Ansprüche 1 bis 9,
**dadurch gekennzeichnet,**
**dass** eine zumindest im Wesentlichen geöffnete Oberseite (6) vorgesehen ist, die im montierten Zustand von einem Boden (38) verschließbar ist.

11. Freizeitfahrzeug (2), insbesondere Wohnmobil oder Wohnwagen, mit zumindest einem Bauteil (1), das nach einem der Ansprüche 1 bis 10 ausgebildet ist, wobei das Bauteil (1) unter einem Boden (38) montiert ist.

## Claims

1. Component (1) for warm air distribution for a recreational vehicle (2), in particular a motorhome or a caravan, with at least one warm air inlet (8) and a first warm air outlet (9),
wherein at least one second warm air outlet (10) is provided, wherein, in the assembled state, warm air supplied via the warm air inlet (8) can be guided through a hot air duct (11) from the warm air inlet (8) to the first warm air outlet (9) and to the second warm air outlet (10), and wherein, in the assembled state, the first warm air outlet (9) is arranged in the area (15) of a first vehicle side (16) and the second warm air outlet (10) is arranged in the area (17) of a second vehicle side (18) opposite the first vehicle side (16),
**characterised in that**
at least one further hot air duct (21) is provided, **in that** a further warm air inlet (22) is provided and **in that** the warm air inlet (8) and the further warm air inlet (22) are arranged next to one another, **in that** at least one further warm air outlet (25) is provided, which, in the mounted state, is arranged in the area (17) of the second vehicle side (18), and **in that**, in the mounted state, warm air supplied via the further warm air inlet (22) can be guided through the further hot air duct (21) from the further warm air inlet (22) to the further warm air outlet (25).

2. Component (1) according to claim 1,
**characterised in that**
in the assembled state, the warm air inlet (8) is arranged in the area (15) of the first vehicle side (16).

3. Component (1) according to one of the preceding claims
**characterised in that**
in the assembled state, the further warm air inlet (22) is in the area (15) of the first vehicle side (16).

4. Component (1) according to one of the preceding claims
**characterised in that**
the hot air duct (11) and the further hot air duct (21) run at least substantially next to one another, wherein at least one partition (7) is provided between the hot air duct (11) and the further hot air duct (21).

5. Component (1) according to claim 4,
**characterised in that**
at least one recess (26) for at least one supply line (27) is arranged in the partition (7).

6. Component (1) according to any one of claims 1 to 5,
**characterised in that**
a circumferential housing wall (4) is provided and **in that** the hot air ducts (11, 21) are surrounded by the housing wall (4).

7. Component (1) according to claim 6,
**characterised in that**
at least one recess (28, 29) for at least one supply line (27) is arranged in the housing wall (4).

8. Component (1) according to any one of claims 1 to 7,
**characterised in that**
an at least substantially closed bottom side (5) is provided.

9. Component (1) according to claim 8,
**characterised in that**
at least one positioning section (35, 36) is provided on the bottom side (5), into which a vehicle part (37) engages when assembled.

10. Component (1) according to any one of claims 1 to 9,
**characterised in that**
an at least substantially open upper side (6) is provided, which can be closed by a floor (38) in the assembled state.

11. Recreational vehicle (2), in particular motorhome or caravan, having at least one component (1) which is designed according to one of claims 1 to 10, wherein the component (1) is mounted under a floor (38).

## Revendications

1. Composant (1) de distribution d'air chaud pour un véhicule de loisirs (2), en particulier un camping-car ou une caravane, comprenant au moins une entrée d'air chaud (8) et une première sortie d'air chaud (9),
dans lequel il est prévu au moins une deuxième sortie d'air chaud (10), dans lequel, dans l'état monté, de l'air chaud amené par l'intermédiaire de l'entrée d'air chaud (8) peut être guidé à travers un passage d'air chaud (11) depuis l'entrée d'air chaud (8) jusqu'à la première sortie d'air chaud (9) et jusqu'à la deuxième sortie d'air chaud (10), et dans lequel, dans l'état monté, la première sortie d'air chaud (9) est agencée dans la zone (15) d'un premier côté du véhicule (16), et la deuxième sortie d'air chaud (10), dans la zone (17) d'un deuxième côté du véhicule (18) se trouvant à l'opposé du premier côté du véhicule (16),
**caractérisé en ce que**
il est prévu au moins un passage d'air chaud supplémentaire (21), **en ce qu'**il est prévu une entrée d'air chaud supplémentaire (22), et **en ce que** l'entrée d'air chaud (8) et l'entrée d'air chaud supplémentaire (22) sont agencées l'une à côté de l'autre,
**en ce qu'**il est prévu au moins une sortie d'air chaud supplémentaire (25) qui, dans l'état monté, est agencée dans la zone (17) du deuxième côté du véhicule (18), et **en ce que**, dans l'état monté, de l'air chaud amené par l'intermédiaire de l'entrée d'air chaud supplémentaire (22) peut être guidé ), à travers le passage d'air chaud supplémentaire (21) depuis l'entrée d'air chaud supplémentaire (22) jusqu'à la sortie d'air chaud supplémentaire (25).

2. Composant (1) selon la revendication 1,
**caractérisé en ce que**
l'entrée d'air chaud (8) est agencée, dans l'état monté, dans la zone (15) du premier côté du véhicule (16).

3. Composant (1) selon l'une quelconque des revendications précédentes,
**caractérisé en ce que**
l'entrée d'air chaud supplémentaire (22) est agencée, dans l'état monté, dans la zone (15) du premier côté du véhicule (16).

4. Composant (1) selon l'une quelconque des revendications précédentes,
**caractérisé en ce que**
le passage d'air chaud (11) et le passage d'air chaud supplémentaire (21) s'étendent au moins sensiblement l'un à côté de l'autre, dans lequel il est prévu au moins une cloison (7) entre le passage d'air chaud (11) et le passage d'air chaud supplémentaire (21).

5. Composant (1) selon la revendication 4,
**caractérisé en ce que**
au moins un évidement (26) destiné au moins à une conduite d'alimentation (27) est réalisé dans la cloison (7).

6. Composant (1) selon l'une quelconque des revendications 1 à 5,
**caractérisé en ce que**
il est prévu une paroi de boîtier périphérique (4) et **en ce que** les passages d'air chaud (11, 21) sont entourés par la paroi de boîtier (4).

7. Composant (1) selon la revendication 6,
**caractérisé en ce que**
au moins un évidement (28, 29) destiné au moins à une conduite d'alimentation (27) est réalisé dans la paroi de boîtier (4).

8. Composant (1) selon l'une quelconque des revendications 1 à 7,
**caractérisé en ce que**
il est prévu une face inférieure au moins sensiblement fermée (5).

9. Composant (1) selon la revendication 8,
**caractérisé en ce que**
il est prévu au niveau de la face inférieure (5) au moins une découpe de positionnement (35, 36) dans laquelle, dans l'état monté, une pièce du véhicule (37) est engagée.

10. Composant (1) selon l'une des revendications 1 à 9,
**caractérisé en ce que**
il est prévu une face supérieure (6) au moins sensiblement ouverte qui, dans l'état monté, peut être fermée par un plancher (38).

11. Véhicule de loisirs (2), en particulier camping-car ou caravane, comprenant au moins un composant (1) qui est réalisé selon l'une quelconque des revendications 1 à 10, dans lequel le composant est monté sous un plancher (38).
